# EUROPÄISCHE PATENTSCHRIFT

(11) **EP 1 758 724 B1**
(45) Veröffentlichungstag und Bekanntmachung des Hinweises auf die Patenterteilung: **06.08.2008**
(21) Anmeldenummer: 04740184.9
(22) Anmeldetag: 23.06.2004
(51) Int. Cl.: B29C 47/16, B29C 47/28, B29C 47/22, B29C 47/02

(54) **EINSTELLBARER BREITSCHLITZEXTRUDERDÜSENKOPF ZUM UMMANTELN MEHRERER KABELLEITER**
SLIT-DIE EXTRUSION HEAD FOR COATING A CABLE CONDUCTOR
TETE D'EXTRUSION A FILIERE PLATE REGLABLE POUR L'ENROBAGE DE PLUSIEURS CONDUCTEURS DE CABLE

(43) Veröffentlichungstag der Anmeldung: 07.03.2007
(73) Patentinhaber: I & T Innovation Technology Entwicklungs- und Holding Aktiengesellschaft, 7011 Siegendorf (AT)
(72) Erfinder: SCHUBERT, Artur, A-2803 Schwarzenbach (AT)
(74) Vertreter: Wildhack, Helmut
(86) Internationale Anmeldenummer: PCT/EP2004/006759
(87) Internationale Veröffentlichungsnummer: WO 2006/000236

(56) Entgegenhaltungen:
- GB-A- 1 389 246
- US-A- 4 150 929
- US-A- 4 783 579

## Beschreibung

Die Erfindung betrifft einen Extruderdüsenkopf, insbesondere Extruder-Querspritzkopf zur Ummantelung von elektrischen und/oder optischen Leitern mit einer in einem Gehäuse angeordneten, mindestens einen an einen Extruder anschließbaren Masseverteilkanal begrenzenden Pinole und einem an der Pinole anschließenden Werkzeug, welches eine Leiterführung und ein Mundstück für den Masseverteilkanal umfasst. Die Erfindung betrifft weiter ein Verfahren zur Herstellung einer Flachbandleitung.

Zur Ummantelung von Leitern durch einen Extruderdüsenkopf wird der Massefluss ausgehend vom Anspritzpunkt des Extruders in eine Düse umgelenkt, durch welche der zu umspritzende Draht im Durchlauf hindurchgezogen wird. Üblicherweise werden auf diese Weise Rundkabel herstellt, bei denen ein zentraler Leiter über eine Leiterführung in der Düse zentriert wird, während der Düsendurchmesser an das Außenmaß des gewünschten Kabels angepasst ist siehe GB 1389246. Vor allem im Kraftfahrzeugbereich werden für Bordnetze zunehmend flexible Flachleiterkabel (Flexible Flat Cable, FCC) eingesetzt, breitseitige Kunststoffschichten aufweisen, zwischen denen Leiter mit flachem rechteckigem Querschnitt isolierend eingeschlossen und dabei mechanisch miteinander verbunden sind siehe US 4150929 Aufgrund der häufig beengten Einbauräume werden immer geringere Kabeldicken nachgefragt, wobei hohe Anforderungen an die mechanische und elektrische Funktionssicherheit unter den rauen Einsatzbedingungen im Fahrbetrieb gestellt werden. Stand der Technik bilden die genannte GB 1389246 und US 4150929.

Ausgehend hiervon liegt der Erfindung die Aufgabe zugrunde, einen Spritzkopf und ein Verfahren der eingangs angegebenen Art dahingehend weiterzuentwickeln, dass die im Stand der Technik aufgetretenen Nachteile vermieden werden und eine zuverlässige Fertigung auch von sehr dünnen Flachleiterkabeln ermöglicht wird.

Zur Lösung dieser Aufgabe wird die in den unabhängigen Patentansprüchen jeweils angegebene Merkmalskombination vorgeschlagen, ein Extruderdüsenkopf nach Anspruch 1 und ein Verfahren nach Anspruch 9. Vorteilhafte Ausgestaltungen und Weiterbildungen der Erfindung ergeben sich aus den abhängigen Ansprüchen.

Gemäß einer nicht beanspruchten Variante weist das Mundstück eine Breitschlitzdüse zur Extrusion einer Flachbandleitung auf, und die Breitschlitzdüse und die mehrere parallele Leiter führende Leiterführung sind mittels einer Verstelleinrichtung relativ zueinander verstellbar. Durch die Breitschlitzdüse kann der Isolatorquerschnitt zur gleichzeitigen Extrusion mehrerer Leiter kalibriert werden, während die Verstelleinrichtung eine hohe Zentrizität und Lagegenauigkeit der Leiter im Endprodukt gewährleistet. Dabei ist zu beachten, dass die Symmetrie am Fertigprodukt optimiert wird, während unterschiedliche Fließparameter im Spritzkopf und das Schrumpfverhalten der Materialien durchaus eine asymmetrische Einstellung zwischen Leiterführung und Schlitzdüse erforderlich machen können.

Vorteilhafterweise ist die Verstelleinrichtung in mindestens einer Querrichtung quer zur Durchtrittsrichtung der Leiter und bevorzugt quer zur Ebene des extrudierten Flachleiterkabels verstellbar, so dass auch bei sehr geringen Kabeldicken noch eine hinreichende Isolationsschicht auf beiden Seiten sichergestellt werden kann.

Eine besonders einfache Ausführung sieht vor, dass die Verstelleinrichtung mindestens eine an dem Mundstück und/oder der Leiterführung angreifende Stellschraube aufweist.

Gemäß einer bevorzugten Ausgestaltung weist die Verstelleinrichtung ein Differentialgewinde für eine Feinverstellung auf. Damit ist es möglich, auch im laufenden Produktionsvorgang bei einfacher Handhabung eine besonders exakte Feineinstellung zu erzielen.

In baulich einfacher Realisierung ist die Stellschraube durch eine Hülse mit Innengewinde durchgeschraubt, wobei die Hülse mit einem Außengewinde gleicher Gangrichtung, jedoch unterschiedlicher Ganghöhe zu jener der Stellschraube in einer Gewindebohrung im Gehäuse oder Werkzeug eingeschraubt ist und zur Veränderung ihrer Einschraubtiefe einen formschlüssigen Kragen, z.B. einen Sechskant für ein Schraubwerkzeug aufweist, während die Stellschraube drehfest, jedoch durch Verdrehen der Hülse axial einstellbar geführt ist und mit dem stirnseitigen Ende ihres Schaftes an dem Mundstück und/oder der Leiterführung anliegt. Es wird also lediglich am Formschlussteil (Sechskant der Hülse) gedreht und dabei eine Feineinstellung erzielt, die für gegebenen Drehwinkel der Ganghöhendifferenz des Außengewindes und des Innengewindes der Hülse entspricht. Dadurch können mit großen Drehwinkeln sehr kleine axiale Verstellungen der Stellschrauben erreicht werden.

Dabei ist es von Vorteil, wenn die Schraubköpfe der Stellschrauben axial beweglich, jedoch drehfest in einer formschlüssigen Verdrehsicherung gelagert sind.

Eine weitere vorteilhafte Ausführung sieht vor, dass die Leiterführung eine Mehrzahl von zueinander parallelen Durchtrittsöffnungen für jeweils einen Leiter aufweist, wobei die Durchtrittsöffnungen einen an die Flachleiter angepassten rechteckigen lichten Querschnitt besitzen. Dies lässt sich auf einfache Weise dadurch verwirklichen, dass die Leiterführung durch zwei über eine Passfläche formschlüssig miteinander verbindbare Platten gebildet ist, wobei die Leiter im Bereich der Passfläche kammartig geführt sind. Eine weitere Herstellungsvereinfachung ergibt sich dadurch, dass parallele Ausnehmungen als Durchtrittsöffnungen in einer Führungsplatte ausgebildet sind und zumindest im Auslassbereich durch eine Leitplatte flächig abgedeckt sind.

Grundsätzlich ist es auch möglich, dass die Verstelleinrichtung hydraulisch oder piezoelektrisch arbeitende Verstellmittel aufweist.

Gemäß der Erfindung mündet der mindestens eine Masseverteilkanal als Mündungsschlitz an einer werkzeugseitigen Stirnfläche der Pinole, wobei die Breite des Mündungsschlitzes der Breite der Breitschlitzdüse am Werkzeug entspricht. Es wird also bereits vor dem Masseeintritt in das Werkzeug auf Grund der auf das Endprodukt abgestimmten Pinole jene Schlitzbreite an der Pinole gewählt, die weitgehend der Breite des Endproduktes entspricht. Dadurch muss im Werkzeug hinsichtlich der Breite keine wesentliche Veränderung erzwungen werden, und der Massefluss erfolgt harmonisch, um so die Qualität des Endprodukts zu verbessern. Zudem entstehen in der Pinole keine Toträume, in denen sich Extrusionsmaterial ansammeln und zu Fertigungsfehlern führen könnte.

Aus fließtechnischer Sicht ist es vorteilhaft, wenn der Masseverteilkanal in Ausströmrichtung gesehen einen in der Breite kontinuierlich erweiterten Mittelabschnitt aufweist, wobei gegebenenfalls Kanalvertiefungen für einen lokal erhöhten Massefluss vorgesehen sind.

Eine weitere vorteilhafte Ausführung sieht vor, dass die Pinole eine über das Gehäuse überstehende Stirnpartie aufweist, und dass das Werkzeug mit einer einzigen Dichtfläche ausschließlich gegenüber der Pinole abdichtet, wobei zwischen dem Gehäuse und dem Werkzeug ein Freiraum vorgesehen ist. Dadurch ist ein einfacher Austausch von Pinolen mit verschiedener Schlitzbreite möglich, ohne dass am Gehäuse selbst besondere Vorkehrungen getroffen werden müssten.

Hierbei ist es günstig, wenn die jeweils eingesetzte Pinole keilartig ausgebildet ist und an ihren gegenüber dem Gehäuse abdichtenden Keilflächen zwei aufeinander zulaufende, den Breitseiten der Flachbandleitung zugeordnete Masseverteilkanäle aufweist.

Um unterschiedliche Fließeigenschaften in den Förderwegen auszugleichen, ist es von Vorteil, wenn die Verteilerkanäle über mindestens zwei getrennt regelbare Heizelemente mit unterschiedlicher Heizleistung temperierbar sind.

Alternativ oder ergänzend ist es auch möglich, dass die Masseverteilkanäle über ein Mengenregelventil mit unterschiedlichen Masseströmen der Extrudermasse beaufschlagbar sind.

Vorteilhafterweise ist die Pinole vorzugsweise über einen Schraubflansch lösbar in einer Aufnahme des Gehäuses gehalten ist, wobei der in der Pinole ausgebildete Masseverteilkanal zumindest bereichsweise durch eine Gehäusefläche abgedichtet ist. Eine weitere Verbesserung ergibt sich dadurch, dass der Masseverteilkanal über eine Einlassöffnung an der Pinole frei von dem Gehäuse direkt an einen Zuführkanal des Extruders anschließbar ist. Für eine Art von Baukastensystem zur variablen Kabelfertigung ist es weiter von Vorteil, wenn eine Mehrzahl von Pinolen als mit einer Breitenstaffelung der Mündungsschlitze der Verteilerkanäle zur Breitenanpassung an unterschiedliche Flachbandleitungen wahlweise in das Gehäuse einsetzbar sind.

Die Erfindung umfasst auch ein Verfahren zur Herstellung einer Flachbandleitung mittels eines vorstehend beschriebenen Extruderdüsenkopfes. Dabei kann erreicht werden, dass die Dicke der Flachbandleitung weniger als 130 *µ*m, insbesondere weniger als 100 *µ*m beträgt. Für eine effiziente Parallelfertigung ist es auch möglich, dass die Flachbandleitung durch im Werkzeug befindliche oder diesem nachgeordnete Trenn- oder Schneidelemente in mehrere Einzelkabel unterteilt wird.

Im Folgenden wird die Erfindung anhand eines in der Zeichnung schematisch dargestellten Ausführungsbeispiels näher erläutert. Es zeigen
- Fig. 1: einen Extruderquerdüsenkopf zur Ummantelung von elektrischen Leitern im Längsschnitt;
- Fig. 2: den Extruderquerdüsenkopf mit Verstelleinrichtung in der Schnittlinie 2 - 2 der Fig. 1;
- Fig. 3: die Verstelleinrichtung in ausschnittsweiser perspektivischer Darstellung;
- Fig. 4: eine Pinole des Extruderquerdüsenkopf im Zentralschnitt senkrecht zu Fig. 1; und
- Fig. 5: einen durch den Extruderquerdüsenkopf extrudierten Flachbandleiter im Querschnitt.

Der in der Zeichnung dargestellte Extruderquerdüsenkopf 10 ist an einen nicht gezeigten Extruder anschließbar, um mehrere parallel hindurchlaufende Flachleiter als Flachbandkabel mit Kunststoff zu ummanteln. Er besteht im Wesentlichen aus einem Gehäuse 12, einer darin befindlichen Pinole 14 und einem der Pinole nachgeordneten Werkzeug 16, welches eine Leiterführung 18 für die Flachdrähte, ein Mund- bzw. Düsenstück 20 für die Extrudermasse und eine Verstelleinrichtung 22 zur Lagejustierung des Mundstücks 20 quer zur Extrusionsrichtung umfasst.

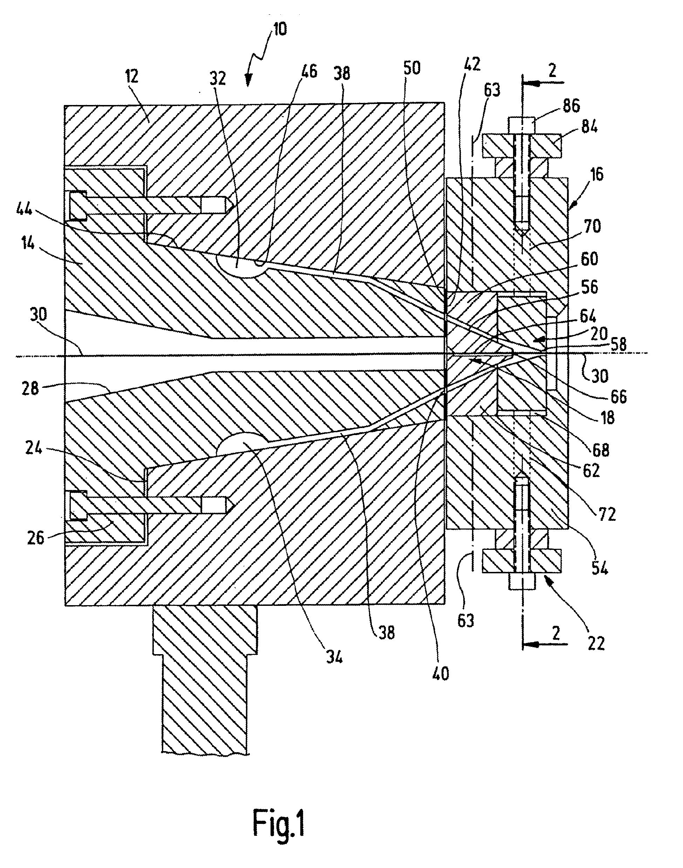

Wie aus Fig. 1 ersichtlich, weist das Gehäuse 12 einen innenliegende Aufnahme 24 auf, in welcher die Pinole 14 über einen Schraubflansch 26 lösbar gehalten ist. Die Pinole 14 ist der Grundform nach keilartig ausgebildet, wobei ein zentraler Schacht 28 für die Durchführung mehrerer paralleler Leiterdrähte 30 freigehalten ist.

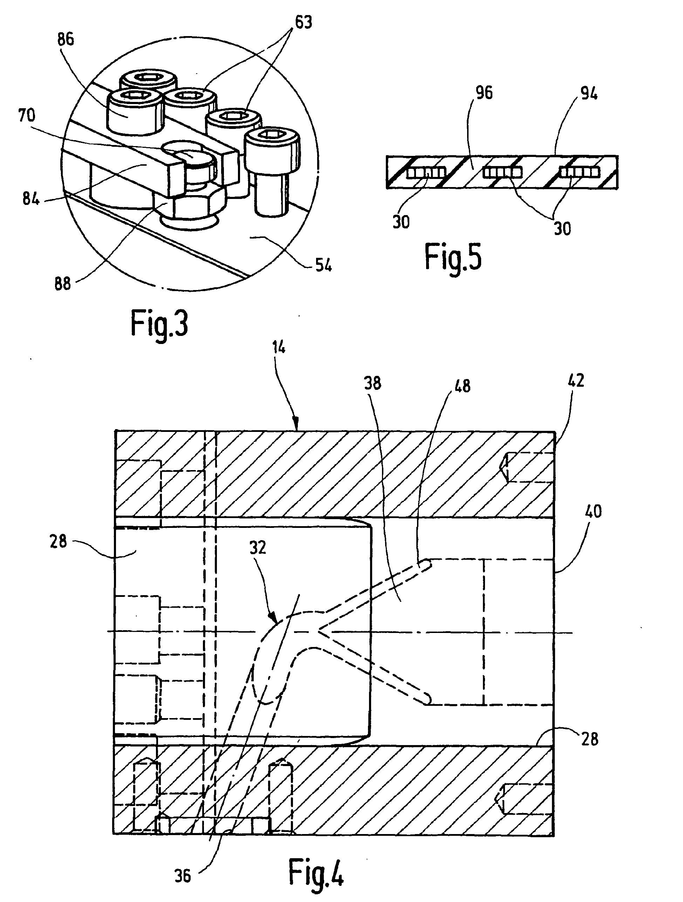

Wie auch aus Fig. 1 ersichtlich, sind in der Pinole 14 zwei Masseverteilkanäle 32, 34 für die extrudierte Kunststoffmasse ausgebildet. Diese sind in Fig. 4 über eine seitliche Einlassöffnung 36 an der Pinole 14 direkt an einen Zuführkanal des Extruders anschließbar und weisen einen in der Breite sich erweiternden Mittelabschnitt 38 zur Umsetzung des kreisförmigen Eintrittsquerschnitts auf einen Mündungsschlitz 40 an der werkzeugseitigen Stirnfläche 42 der Pinole 14. Die Mittelabschnitte 38 sind als Ausnehmungen an den aufeinander zulaufenden Keilflächen 44 der Pinole ausgebildet und durch die korrespondierenden Gehäuseflächen 46 abgedeckt. Um eine gleichmäßige Masseverteilung zu gewährleisten, sind in den Randbereichen der Mittelabschnitte 38 lokale Kanalvertiefungen 48 vorgesehen.

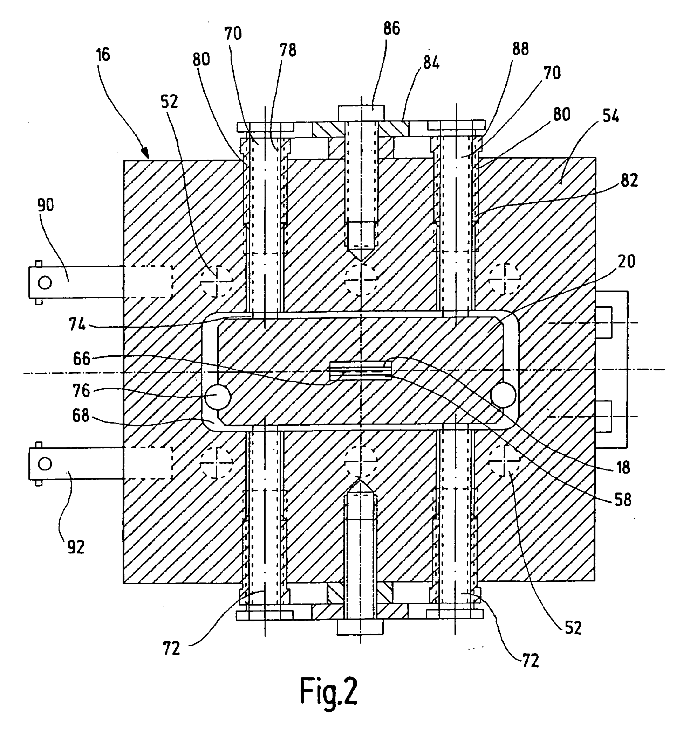

Die Pinole 14 tritt besitzt eine aus dem Gehäuse 12 vortretenden Stirnpartie 50, so dass das Werkzeug 16 nur gegenüber der Stirnfläche 42 der Pinole 14 abdichtet und im Abstand von dem Gehäuse 12 gehalten ist. Die Fixierung erfolgt durch eine Mehrzahl von Klemmschrauben 52, die durch den Träger 54 quer hindurch stirnseitig in das Gehäuse 12 eingreifen und der besseren Übersichtlichkeit halber nur in Fig. 2 gezeigt sind. Im verspannten Zustand setzen sich die Masseverteilkanäle 32, 34 über die Mündungsschlitze 40 der Pinole 14 in den Durchbrüchen 56 der Leiterführung 18 mit gleichem Querschnitt fort, bis sie schließlich in einer Breitschlitzdüse 58 des Düsenstücks 20 so konvergieren, dass sich die Masseflüsse von oben und unten unter Einschluss der Leiter 30 an der Austrittsstelle vereinigen.

Wesentlich für die Qualität des Endprodukts ist, dass die Breite der Mündungsschlitze 40 der Pinole 14 im Wesentlichen der Breite der Schlitzdüse 58 am Werkzeug 16 entspricht. Um eine Breitenanpassung an unterschiedliche zu fertigende Flachbandleitungen zu ermöglichen, sind eine Mehrzahl von Pinolen als Baukastensystem mit einer Breitenstaffelung der Mündungsschlitze 40 wahlweise in das Gehäuse 12 einsetzbar. Dabei wird jeweils jene Pinole ausgesucht, deren Breite der Mündungsschlitze 40 der Düsenbreite des momentan eingesetzten Werkzeugs 16 am nächsten kommt.

Die Leiterführung 18 in dem Werkzeug 16 ist durch zwei Platten 60, 62 gebildet, die unter Verspannung durch Schrauben 63 an einer Passfläche 64 formschlüssig miteinander verbindbar sind, wobei die Leiter 30 im Bereich der Passfläche kammartig geführt sind. Zu diesem Zweck sind in der Führungsplatte 62 parallele Ausnehmungen 66 eingebracht, die als Durchtrittsöffnungen durch die darüber liegende Leitplatte 60 abgedeckt sind und einen an die Flachleiter 30 angepassten rechteckigen Querschnitt aufweisen.

Zur Verbesserung der Querschnittssymmetrie des Endprodukts ist durch die Verstelleinrichtung 22 eine Querpositionierung des Düsenmundstücks 20 in einer Ausnehmung 68 des Werkzeugträgers 54 quer zur Führungsrichtung der Leiterführung 18 möglich. Wie am besten aus Fig. 2 ersichtlich, sind hierfür obere und untere Stellschrauben 70, 72 vorgesehen, die mit dem stirnseitigen Ende 74 ihres Schraubschaftes im seitlichen Abstand voneinander paarweise oben und unten an dem Düsenmundstück 20 angreifen. Dieses ist dabei mit Spiel an stirnseitigen Haltezapfen 76 der Pinole 14 aufsteckbar gehalten.

Die Stellschrauben 70, 72 sind mit ihrem Gewinde 78 in Gewindehülsen 80 geführt, welche ihrerseits in ein Gewinde 82 des Trägers 54 eingeschraubt sind. Die Gewinde 78, 82 sind als Differentialgewinde ausgeführt, d.h. sie weisen gleiche Gangrichtung, jedoch unterschiedliche Ganghöhen auf, so dass eine Feinverstellung aufgrund des Ganghöhenunterschieds möglich ist. Zu diesem Zweck sind die Stellschrauben 70, 72 in einer Verdrehsicherung drehfest, jedoch axial beweglich geführt.

Wie auch aus Fig. 3 zu ersehen, ist die Verdrehsicherung durch Gabelstücke 84 gebildet, welche die Schraubköpfe der Stellschrauben 70,72 formschlüssig umgreifen und mittels Halteschraube 86 an dem Träger 54 fixiert sind. Die Gewindehülsen 80 besitzen einen Sechskantkragen 88 für das Ansetzen eines Gabelschlüssels. Durch Drehen der Hülsen 80 verändert sich deren Einschraubtiefe gegenüber dem Träger 54, und gleichzeitig wandern die drehfest gehaltenen Stellschrauben 70, 72 in ihrer relativen Lage zur jeweiligen Hülse in Gegenrichtung, so dass als Differenzbewegung ein geringer Vorschub resultiert. Es versteht sich, dass einander gegenüberliegende Stellschrauben 70, 72 synchron bewegt werden müssen. Dadurch kann die Lage der Schlitzdüse 58 gegenüber der trägerfest gehaltenen Leiterführung 18 quer zur Extrusionsrichtung sehr fein justiert werden, wobei unter Umständen gerade eine exzentrische Justage zu einem symmetrischen Fertigprodukt führt.

Zum Ausgleich unterschiedlicher Fließparameter in den Masseverteilkanälen 32, 34 kann eine Gradientenheizung eingesetzt werden, welche zwei den beiden Kanälen räumlich zugeordnete und getrennt regelbare Heizelemente 90, 92 umfasst (Fig. 2).Gegebenenfalls ist es auch möglich, die Masseverteilkanäle über ein Mengenregelventil mit unterschiedlichen Masseströmen zu beaufschlagen (nicht gezeigt).

Als Endprodukt lässt sich mittels des vorstehend beschriebenen Querspritzkopfes 10 ein Flachbandkabel 94, wie es im Querschnitt in Fig. 5 veranschaulicht ist, mit sehr geringer Dicke in der gewünschten Symmetrie herstellen. Darunter ist hier zu verstehen, dass die einzelnen Kupferleiter 30 im gewünschten Abstand voneinander in der Mittelebene des umspritzten Kunststoffmantels 96 liegen. Hierbei sind Kabeldicken von weniger als 100 *µ*m grundsätzlich machbar. Dabei ist es denkbar, dass der Kabelquerschnitt von der Rechteckform abweicht, beispielsweise indem Einfallstellen oder Einkerbungen in der Kunststoffschicht zwischen den Leitern eingebracht und die Seitenkanten abgerundet werden.

## Patentansprüche

1. Extruderdüsenkopf, insbesondere Extruder-Querspritzkopf zur Ummantelung von elektrischen und/oder optischen Leitern (30) mit einer in einem Gehäuse (12) angeordneten, mindestens einen an einen Extruder anschließbaren Masseverteilkanal (32, 34) begrenzenden Pinole (14) und einem an der Pinole (14) anschließenden Werkzeug (16), welches eine Leiterführung (18) und ein Mundstück (20) für den Masseverteilkanal (32, 34) umfasst, wobei das Mundstück (20) eine Breitschlitzdüse (58) zur Extrusion einer Flachbandleitung (94) aufweist, wobei der mindestens eine Masseverteilkanal (32, 34) als Mündungsschlitz (40) an einer werkzeugseitigen Stirnfläche der Pinole (14) mündet, und wobei die Breite des Mündungsschlitzes (40) der Breite der Breitschlitzdüse (58) am Werkzeug (16) entspricht, **dadurch gekennzeichnet, dass** die Pinole (14) eine über das Gehäuse (12) überstehende Stirnpartie (50) aufweist und das Werkzeug (16) mit einer einzigen Dichtfläche ausschließlich gegenüber der Pinole (14) abdichtet, wobei zwischen dem Gehäuse (12) und dem im Abstand vom Gehäuse (12) gehaltenen Werkzeug (16) ein Freiraum vorgesehen ist.

2. Extruderdüsenkopf nach Anspruch 1, **dadurch gekennzeichnet, dass** der Masseverteilkanal (32, 34) in Ausströmrichtung gesehen einen in der Breite kontinuierlich erweiterten Mittelabschnitt (38) aufweist, wobei gegebenenfalls Kanalvertiefungen (48) für einen lokal erhöhten Massefluss vorgesehen sind.

3. Extruderdüsenkopf nach Anspruch 1 oder 2, **dadurch gekennzeichnet, dass** die Pinole keilartig ausgebildet ist und an ihrer gegenüber dem Gehäuse (12) abdichtenden Keilflächen (44) zwei aufeinander zulaufende, den Breitseiten der Flachbandleitung (94) zugeordnete Masseverteilkanäle (32, 34) aufweist.

4. Extruderdüsenkopf nach einem der Ansprüche 1 bis 3, **dadurch gekennzeichnet, dass** die Masseverteilkanäle (32, 34) über mindestens zwei getrennt regelbare Heizelemente (90, 92) mit unterschiedlicher Heizleistung temperierbar sind.

5. Extruderdüsenkopf nach einem der Ansprüche 1 bis 4, **dadurch gekennzeichnet, dass** die Masseverteilkanäle (32, 34) über ein Mengenregelventil mit unterschiedlichen Masseströmen der Extrudermasse beaufschlagbar sind.

6. Extruderdüsenkopf nach einem der Ansprüche 1 bis 5, **dadurch gekennzeichnet, dass** die Pinole (14) vorzugsweise über einen Schraubflansch (26) lösbar in einer Aufnahme des Gehäuses (12) gehalten ist, wobei der in der Pinole (14) ausgebildete Masseverteilkanal (32, 34) zumindest bereichsweise durch eine Gehäusefläche (46) abgedichtet ist.

7. Extruderdüsenkopf nach einem der Ansprüche 1 bis 6, **dadurch gekennzeichnet, dass** der Masseverteilkanal (32, 34) über eine Einlassöffnung (36) an der Pinole (14) frei von dem Gehäuse (12) direkt an einen Zuführkanal des Extruders anschließbar ist.

8. Extruderdüsenkopf nach einem der Ansprüche 1 bis 7, **dadurch gekennzeichnet, dass** eine Mehrzahl von Pinolen (14) als Baukastensystem mit einer Breitenstaffelung der Mündungsschlitze der Masseverteilkanäle (32, 34) zur Breitenanpassung an unterschiedliche Flachbandleitungen (94) wahlweise in das Gehäuse (12) einsetzbar sind.

9. Verfahren zur Herstellung einer Flachbandleitung (94) mittels eines Extruderdüsenkopfes (10) nach einem der vorhergehenden Ansprüche, wobei gegebenenfalls die Dicke der Flachbandleitung (94) weniger als 130 µm, insbesondere weniger als 100 µm, beträgt.

10. Verfahren nach Anspruch 9, **dadurch gekennzeichnet, dass** die Flachbandleitung (94) durch im Werkzeug befindliche oder diesem nachgeordnete Trenn- oder Schneidelemente in mehrere Einzelkabel unterteilt wird.

## Claims

1. Slit-die extrusion head, particularly transverse injection head for coating electrical and/or optical cable conductors (30), comprising a sleeve (14) arranged in a housing (12) and delimiting at least one mass distribution channel (32, 34) connectable to an extruder, and a tool (16) which is joining to the sleeve (14) and includes a conductor guide (18) and a mouthpiece (20) for the mass distribution channel (32, 34), said mouthpiece (20) having a fishtail die (58) for extruding a flat ribbon cable (94), wherein said at least one mass distribution channel (32, 34) opens out as an orifice slit (40) at a front surface of the sleeve (14) at the tool side, and wherein the width of said orifice slit (40) corresponds to the width of said fishtail die (58) of the tool (16), **characterised in that** the sleeve (14) comprises a front portion (50) which projects beyond said housing (12) and seals said tool (16) by a single sealing surface exclusively in relation to said sleeve (14), a free space being provided between said housing (12) and said tool (16) which is kept spaced from said housing (12).

2. Slit-die extrusion head according to claim 1, **characterised in that** said mass distribution channel (32, 34), seen in discharging direction, has a middle portion (38), the width of which enlarges continuously, channel deepenings (48) being optionally provided for a locally increased mass flow.

3. Slit-die extrusion head according to claim 1 or 2, **characterised in that** said sleeve is wedge-shaped and comprises two converging mass distribution channels (32, 34) at its wedge surfaces (44), which seal in relation to the housing (12) and are assigned to the broad sides of said flat ribbon cable (94).

4. Slit-die extrusion head according to any of claims 1 to 3, **characterised in that** said mass distribution channels (32, 34) may be tempered by at least two separately controllable heating elements (90, 92) of different heating power.

5. Slit-die extrusion head according to any of claims 1 to 4, **characterised in that** said mass distribution channels (32, 34) may be fed with a different mass flow of extruder mass by a volume control valve.

6. Slit-die extrusion head according to any of claims 1 to 5, **characterised in that** said sleeve (14) is detachably held in a holding fixture of the housing (12), preferably by a screw flange (26), at least a portion of said mass distribution channel (32, 34) formed in said sleeve (14) being sealed by a housing surface (46).

7. Slit-die extrusion head according to any of claims 1 to 6, **characterised in that** said mass distribution channels (32, 34) is directly connectable to a supply channel of the extruder by an inlet opening (36) at said sleeve (14) free from said housing (12).

8. Slit-die extrusion head according to any of claims 1 to 7, **characterised in that** a plurality of sleeves (14), as a modular construction having a width grading of opening slits of said mass distribution channels (32, 34), may selectively be inserted into said housing (12) for adapting the width to different flat ribbon cables (94).

9. Method of producing a flat ribbon cable (94) by means of a slit-die extrusion head according to any of the preceding claims, the thickness of said flat ribbon cable (94) optionally being less than 130 µm, particularly less than 100 µm.

10. Method according to claim 9, **characterised in that** said flat ribbon cable (94) is subdivided into several individual cables by severing or cutting elements which are either in said tool or are postponed to it.

## Revendications

1. Tête d'extrusion, particulièrement tête d'équerre d'une extrudeuse, pour l'enrobage des conducteurs électriques et/ou optiques (30), comprenant une douille (14), qui est disposée dans un boîtier (12) et délimite au moins un conduit de distribution de masse (32, 34) pouvant être relié à une extrudeuse, et comprenant un outil (16), à relier à la douille (14), qui possède un guidage de conducteur (18) et une filière (20) pour le conduit de distribution de masse (32, 34), ladite filière (20) comprenant une filière plate (58) pour l'extrusion d'un conducteur à ruban (94), ledit au moins un conduit de distribution de masse (32, 34) débouche comme une fente d'orifice (40) à une surface frontale au côté de l'outil de la douille (14), la largeur de la fente d'orifice (40) correspondant à la largeur de la filière plate (94) à l'outil (16), **caractérisée en ce, que** la douille (14) comprend une partie frontale (50) dépassant le boîtier (12), et rend l'outil (16) étanche avec une seule surface d'étanchéité exclusivement par rapport à la douille (14), un espace libre étant prévu entre le boîtier (12) et l'outil (16) espacé du boîtier (12).

2. Tête d'extrusion selon la revendication 1, **caractérisée en ce, que** le conduit de distribution de masse (32, 34), vu en direction d'écoulement, comprend un segment médiane (38), dont la largeur s'élargit continuellement, des approfondissements du conduit (48), le cas échéant, étant prévus pour une coulée de masse localement augmentée.

3. Tête d'extrusion selon la revendication 1 ou 2, **caractérisée en ce, que** la douille est en forme d'une clavette, et comprend deux conduits de distribution de masse (32, 34) convergents à ses surfaces de clavette (44) étanchant par rapport au boîtier (12), qui sont attribués au côtés larges du conducteur à ruban (94).

4. Tête d'extrusion selon une quelconque des revendications 1 à 3, **caractérisée en ce, que** les conduits de distribution de masse (32, 34) peuvent être tempérés par au moins deux éléments de chauffage (90, 92), qui peuvent être réglés séparément et ont chacun un rendement calorifique différent.

5. Tête d'extrusion selon une quelconque des revendications 1 à 4, **caractérisée en ce, que** les conduits de distribution de masse (32, 34) peuvent être fournis des coulées de masse différentes de la masse extrudée par une soupape de réglage de quantité.

6. Tête d'extrusion selon une quelconque des revendications 1 à 5, **caractérisée en ce, que** la douille (14) est tenue d'une manière détachable, de préférence par une flasque à vis (26), dans un logement du boîtier (12), au moins une zone du conduit de distribution de masse (32, 34), qui est formé dans la douille (14), étant rendue étanche par une surface (46) du boîtier.

7. Tête d'extrusion selon une quelconque des revendications 1 à 6, **caractérisée en ce, que** le conduit de distribution de masse (32, 34) peut être relié d'une façon libre du boîtier (12) directement à un conduit d'amenée de l'extrudeuse à travers un orifice d'amenée (36) prévue à la douille (14).

8. Tête d'extrusion selon une quelconque des revendications 1 à 7, **caractérisée en ce, que** plusieurs douilles (14) peuvent être introduites sélectivement dans le boîtier (12), comme un système des unités de montage, ayant des largeurs en gradin des fentes d'orifice des conduits de distribution de masse (32, 34) pour adapter la largeur aux conducteurs à ruban (94) différents.

9. Procédé de production d'un conducteur à ruban (94) au moyen d'une tête d'extrusion (10) selon une quelconque des revendications précédents, dans lequel l'épaisseur du conducteur à ruban (94), le cas échéant, se monte à pas moins de 130 µm, particulièrement à pas moins de 100 µm.

10. Procédé selon la revendication 9, **caractérisée en ce, que** le conducteur à ruban (94) est divisé en plusieurs câbles individuels par des éléments à tronçonner ou à couper, qui se trouvent dans l'outil ou sont intercalés à la suite.
